(19)

Europäisches
Patentamt

European
Patent Office

Office européen
des brevets

(11)  **EP 4 650 481 A1**

(12)  **EUROPEAN PATENT APPLICATION**
published in accordance with Art. 153(4) EPC

(43) Date of publication:
**19.11.2025   Bulletin 2025/47**

(21) Application number: **24741276.0**

(22) Date of filing: **10.01.2024**

(51) International Patent Classification (IPC):
$C22C\ 38/02^{(2006.01)}$  $C22C\ 38/04^{(2006.01)}$
$C22C\ 38/06^{(2006.01)}$  $C22C\ 38/12^{(2006.01)}$
$C22C\ 38/20^{(2006.01)}$  $C22C\ 38/22^{(2006.01)}$
$C22C\ 38/24^{(2006.01)}$  $C22C\ 38/26^{(2006.01)}$
$C22C\ 38/28^{(2006.01)}$  $C22C\ 38/32^{(2006.01)}$
$C22C\ 38/38^{(2006.01)}$  $C22C\ 38/44^{(2006.01)}$
$C22C\ 38/50^{(2006.01)}$  $C22C\ 38/54^{(2006.01)}$
$C22C\ 38/58^{(2006.01)}$  $C21D\ 1/26^{(2006.01)}$
$C21D\ 6/00^{(2006.01)}$  $C21D\ 8/02^{(2006.01)}$
$C21D\ 9/00^{(2006.01)}$  $C21D\ 9/52^{(2006.01)}$

(52) Cooperative Patent Classification (CPC):
**C21D 1/26; C21D 6/00; C21D 8/02; C21D 9/00;
C21D 9/52; C21D 11/00; C22C 38/02; C22C 38/04;
C22C 38/06; C22C 38/12; C22C 38/20;
C22C 38/22; C22C 38/24; C22C 38/26;
C22C 38/28;**                               (Cont.)

(86) International application number:
**PCT/CN2024/071511**

(87) International publication number:
**WO 2024/149279 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **10.01.2023   CN 202310033276**

(71) Applicant: **BAOSHAN IRON & STEEL CO., LTD.
Shanghai 201900 (CN)**

(72) Inventors:
 • **PAN, Hua
  Shanghai 201900 (CN)**

 • **LEI, Ming
  Shanghai 201900 (CN)**
 • **WU, Tianhai
  Shanghai 201900 (CN)**
 • **CHEN, Meng
  Shanghai 201900 (CN)**
 • **GONG, Tao
  Shanghai 201900 (CN)**
 • **JIANG, Haomin
  Shanghai 201900 (CN)**

(74) Representative: **Kuhnen & Wacker
Patent- und Rechtsanwaltsbüro PartG mbB
Prinz-Ludwig-Straße 40A
85354 Freising (DE)**

(54)  **PLATED GPA-GRADE STEEL HAVING EXCELLENT SPOT WELDABILITY AND MANUFACTURING METHOD THEREFOR**

(57)    Disclosed in the present invention is a plated GPa-grade steel having excellent spot weldability, comprising a steel substrate and a zinc-containing plating layer on the surface of the steel substrate. The steel substrate contains Fe and inevitable impurity elements, and the steel substrate further contains the following chemical elements in percentage by mass: C: 0.18-0.22%; Si: 0.80-1.20%; Mn: 1.50-2.50%; Cr: 2.00-4.00%; and Al: 0.40-0.90%. Accordingly, further disclosed in the present invention is a manufacturing method for the plated GPa-grade steel having excellent spot weldability, and the manufacturing method can be used for effectively preparing the described plated GPa-grade steel having excellent spot weldability of the present invention. When the spot welding process is used for welding, if a solder joint surface crack is generated, the

**(Cont. next page)**

maximum length of the solder joint surface crack is less than 5% of the thickness of a plate.

Fig. 1

(52) Cooperative Patent Classification (CPC): (Cont.)
**C22C 38/32; C22C 38/38; C22C 38/44;
C22C 38/50; C22C 38/54; C22C 38/58**

## Description

This application claims priority to Chinese Patent Application No. 202310033276.9, filed on January 10, 2023, the contents of which are incorporated by reference herein in their entirety.

## Technical Field

The present disclosure relates to a high-strength steel and a method for manufacturing the same, particularly to a GPA steel with a coating and a method for manufacturing the same.

## Background

At present, with the advancement of the lightweight automobile process, as well as the requirement for improved vehicle corrosion resistance, the demand for ultra-high-strength steel with a coating is growing.

On the other hand, resistance spot welding has become the most important connection method in automobile welding production due to its advantages of fast welding speed and low cost, etc.

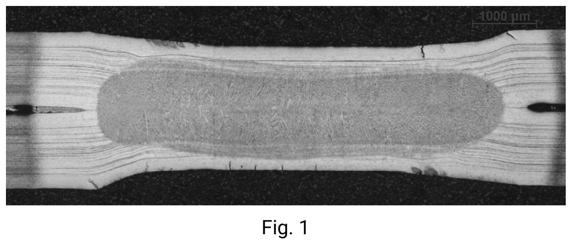

However, joints of many ultra-high-strength steels with a zinc-containing coating often show good quasi-static mechanical properties during spot welding, but cracks on surface of solder joint, as shown in Figure 1, often appears on the surface of the steel plate in contact with electrodes and the nearby area. It is very difficult to suppress the formation of such cracks on surface of solder joint. This kind of cracks has become an important obstacle and bottleneck for the application of GPA steel with a zinc-containing coating in the automotive field. On the other hand, the automotive industry has listed joint surface welding cracks as one of the important indicators for evaluating the spot-welding performance of high-strength steel with a zinc-containing coating.

There are some technical solutions in the prior art to control welding cracks:

For example, the Chinese patent document with a publication number of CN108015401A, published on May 11, 2018, and titled "Resistance spot welding method of galvanized high-strength steel with good joint performance", discloses a method for inhibiting spot-welding surface cracks while ensuring that the performance of the solder joint is not reduced through spot welding process innovation.

For another example, the Chinese patent document with a publication number of CN109385515A, published on February 26, 2019, and titled "Multilayer steel and method for reducing liquid metal embrittlement", discloses a method for suppressing the generation of spot welding cracks in high-strength steel, which inhibits the generation of spot welding cracks by first decarburizing and then galvanizing the high-strength steel, so as to control the thickness of the decarburized layer between 10 and 50 microns.

For another example, the Chinese patent document with a publication number of CN110892087A, published on March 17, 2020, and titled "Zinc-coated steel plate with high resistance spot weldability", discloses a technical solution for forming an internal oxide layer in the steel plate by increasing the dew point, so as to improve the distribution of surface components, thereby reducing the occurrence of spot-welding cracks. However, the technical solution has the problem that it is difficult to control the thickness and uniformity of the internal oxide layer and the uniformity of the distribution of the surface components of the steel plate.

## Summary

One of the objects of the present disclosure is to provide a GPA steel having a coating with excellent spot-welding performance, which has very excellent quality and performance. It satisfies the user's requirements for the performance of GPA steel with a coating and the mechanical properties of spot-welding joints, while having low spot-welding crack sensitivity, and it has a good application prospect. In the present disclosure, GPA steel refers to the steel having a tensile strength of ≥1000MPa.

In order to achieve the above purpose, the present disclosure provides a GPA steel having a coating with excellent spot-welding performance, which comprises a steel substrate and a zinc-containing coating on the surface of the steel substrate, wherein the steel substrate comprises Fe and unavoidable impurity elements, and the steel substrate further comprises the following chemical elements in a mass percentage:
C: 0.18~0.22%; Si: 0.80~1.20%; Mn: 1.50~2.50%; Cr: 2.00~4.00%; Al: 0.40~0.90%.

Correspondingly, the present disclosure also provides a GPA steel having a coating with excellent spot-welding performance, which comprises a steel substrate and a zinc-containing coating on the surface of the steel substrate, wherein the steel substrate comprises each chemical element in a mass percentage as follows:
C: 0.18~0.22%; Si: 0.80~1.20%; Mn: 1.50~2.50%; Cr: 2.00~4.00%; Al: 0.40~0.90%; with a balance of Fe and unavoidable impurity elements.

Further, in some embodiments of the present disclosure, the chemical elements of the steel substrate may also comprise at least one of the following elements (in mass percentage):

$$0 < Nb \leq 0.03\%;$$

$$0 < Ti \leq 0.03\%;$$

$$0 < V \leq 0.03\%.$$

Still further, the mass percentage content of each chemical element in the steel substrate meets at least one of the following items:

$$0 < Nb \leq 0.01\%;$$

$$0 < Ti \leq 0.01\%;$$

$$0 < V \leq 0.01\%.$$

Still further, the mass percentage content of each chemical element in the steel substrate meets at least one of the following items:

C: 0.20~0.22%;
Si: 0.80~1.00%;
Mn: 2.00~2.50%;
Cr: 2.00~3.00%.

Further, in the GPA steel having a coating of the present disclosure, the mass percentage of unavoidable impurity elements in the steel substrate meets: $P \leq 0.01\%$, $S \leq 0.01\%$, $N \leq 0.003\%$.

In the above technical solution of the present disclosure, the chemical composition design mainly based on carbon, silicon, manganese and chromium is adopted, which makes full use of the role of carbon, silicon, manganese, chromium elements in the phase transformation of the material, thereby realizing the unification of high mechanical properties and high spot welding performance in the GAP steel of the present disclosure, and finally obtaining a steel plate product having a coating with excellent spot welding performance.

In the GPA steel having a coating of the present disclosure, the chemical elements are designed according to the following principles:

C: In the GPA steel having a coating with excellent spot-welding performance of the present disclosure, the solubility of carbon in austenite is much higher than that in ferrite, which can prolong the gestation period before the austenite transition and reduce the Ms temperature. The higher the mass percentage of carbon in the steel, the higher the fraction of residual austenite, and the higher the enrichment degree of carbon in residual austenite during partitioning, which is conducive to enhancing the stability of residual austenite, producing the TRIP effect and improving the ductility of the material. In addition, carbon is also the most basic solid solution-strengthening element in steel. However, the inventors of the present disclosure found that an overly high mass percentage of carbon will reduce the weldability of steel, particularly significantly increase the tendency for cracks on the surface of solder joint. In addition, when the mass percentage of C in the steel exceeds 0.22%, more twinning is likely to occur after quenching, which increases the cracking sensitivity of the sheet. Therefore, in the GPA steel having a coating with excellent spot-welding performance of the present disclosure, the mass percentage of the C element is controlled at 0.18~0.22%, for example, 0.19%, 0.20%, 0.21 %, or within a range defined by any two of the aforementioned values.

Of course, in some embodiments, in order to obtain better implementation effects, the mass percentage of the C element can be further preferably controlled at 0.2~0.22%.

Si: In the GPA steel having a coating with excellent spot-welding performance of the present disclosure, the solubility of silicon in carbides is very small. Si can strongly inhibit the formation of cementite during the partitioning treatment, promote the enrichment of carbon into the residual austenite, and improve the stability of the residual austenite. However, an overly high mass percentage of silicon will reduce the high-temperature plasticity of the steel, and form a stable oxide on the surface of the steel plate to reduce the wettability of the steel plate. In particular, the inventors of the present disclosure found that silicon is an element that significantly increases the tendency of cracks on the surface of solder joint. Therefore, in the GPA steel having a coating with excellent spot-welding performance of the present disclosure, the mass percentage of the Si element is controlled at 0.80~1.20%, for example, 0.85%, 0.90%, 0.95%, 1.00%, 1.05%, 1.10%, 1.15%, or within a range defined by any two of the aforementioned values.

Of course, in some embodiments, the mass percentage of the Si element can be further preferably controlled at 0.80~1.00%.

Mn: In the GPA steel having a coating with excellent spot-welding performance of the present disclosure, manganese can expand the austenite phase zone, reduce the $Ac_3$, $M_s$ and $M_f$ points, improve the austenite stability and hardenability of steel, and reduce the critical transition rate, which is conducive to the preservation of residual austenite at room temperature. At the same time, manganese can also play a solid solution strengthening effect in steel. However, when the mass percentage of manganese is too high, it will aggravate the grain coarsening trend, reduce the plasticity and toughness of the steel, and deteriorate the corrosion resistance, especially will increase the enrichment of manganese in the superficial layer of the base metal under the coating, increase the sensitivity of cracks on the surface of solder joint, and deteriorate the welding performance. If the mass percentage of manganese is too low, the ferrite and pearlite band structure will be formed at a low cooling velocity due to segregation. Therefore, in the GPA steel having a coating with excellent spot-welding performance of the present disclosure, the mass percentage of the Mn element is controlled at 1.50~2.50%, for example, 1.60%, 1.70%, 1.80%, 1.90%, 2.00%, 2.10%, 2.20%, 2.30%, 2.40%, or within a range defined by any two of the aforementioned values.

Of course, in some embodiments, the mass percentage of the Mn element can be further preferably controlled at 2.00~2.50%.

Cr: In the GPA steel having a coating with excellent spot-welding performance of the present disclosure, Cr increases the strength and hardness of steel while having a minimal effect on plasticity and toughness. More importantly, Cr can help address the reduction in hardenability of steel caused by reduced manganese addition for the purpose of reducing manganese enrichment under the coating. Chromium can enhance the hardenability of steel and has secondary hardening effects, improving the hardness and wear resistance of carbon steel without making it brittle. Chromium is an element that expands the austenite **Fehler! Es ist nicht möglich, durch die Bearbeitung von Feldfunktionen Objekte zu erstellen.** phase region, improves hardenability and thermal strength, reduces the temperature range in which the **Fehler! Es ist nicht möglich, durch die Bearbeitung von Feldfunktionen Objekte zu erstellen.** phase region exists at a high temperature, promotes **Fehler! Es ist nicht möglich, durch die Bearbeitung von Feldfunktionen Objekte zu erstellen.** phase transformation, and suppresses the precipitation of high-temperature **Fehler! Es ist nicht möglich, durch die Bearbeitung von Feldfunktionen Objekte zu erstellen.** ferrite. In addition, the inventors of the present disclosure also found that the tendency for high-strength steel to develop cracks on the surface of solder joint decreases with an increase in Cr content, but the Cr content in carbon steel should not be too high. Therefore, in the GPA steel having a coating with excellent spot-welding performance of the present disclosure, the mass percentage of the Cr element is controlled at 2.00~4.00%, for example, 2.20%, 2.50%, 2.70%, 3.00%, 3.20%, 3.50%, 3.70%, or within a range defined by any two of the aforementioned values.

Of course, in some embodiments, the mass percentage of the Cr element can be further preferably controlled at 2.00~3.00%.

Al: In the GPA steel having a coating with excellent spot-welding performance of the present disclosure, when aluminum exists in a solid solution state, it can increase the stacking fault energy, inhibit the precipitation of cementite and the transition from $\gamma$ to martensite, and improve the stability of austenite. Moreover, aluminum forms fine and diffusely distributed insoluble mass points with carbon and nitrogen that can refine the grains, but the strengthening effect of aluminum is weaker than that of silicon, and its ability to stabilize austenite is also weaker than that of silicon. In addition, when the mass percentage of aluminum is too high, it is easy to form a large number of oxide inclusions, which is not conducive to continuous casting for steelmaking. Therefore, in the GPA steel having a coating with excellent spot-welding performance of the present disclosure, the mass percentage of the Al element is controlled at 0.40~0.90%, for example, 0.50%, 0.60%, 0.70%, 0.80%, or within a range defined by any two of the aforementioned values.

Nb, Ti, V: These elements can further improve the performance of the high-strength steel of the present disclosure. Niobium, titanium, and vanadium can form fine carbides with carbon, promoting microstructure refinement. However, the formation of such fine carbides is unfavorable for the enrichment of carbon in residual austenite and the stabilization of residual austenite. In addition, the addition of the above elements will increase the cost of the material. Considering the performance of the material and cost control, in the technical solution of the present disclosure, at least one of the aforementioned elements can be preferentially added.

In some embodiments, the chemical element of the GPA steel of the present disclosure comprises one or more elements with the following mass percentage content:

$$0.001\% \leq Nb \leq 0.03\%;$$

$$0.001\% \leq Ti \leq 0.03\%;$$

$$0.001\% \leq V \leq 0.03\%.$$

P, S and N elements are the impurity elements in the GPA steel having a coating of the present disclosure, and if technical conditions permit, in order to obtain the steel with better performance and better quality, the content of impurity elements in the GPA steel having a coating should be reduced as much as possible.

Among them, although P can play a role in solid solution strengthening, inhibit the formation of carbides and is conducive to improving the stability of residual austenite, an overly high mass percentage of P will weaken the grain boundaries, increase the brittleness of the material, and deteriorate the welding performance. That is to say, the positive effect of the P element is weaker than its negative effect. Therefore, the P mass percentage is preferably controlled at $P \leq 0.01\%$. In some embodiments, the P mass percentage in the steel substrate meets $0 < P \leq 0.01\%$, for example, $0.001 \leq P \leq 0.01\%$.

An overly high mass percentage of N can cause difficulties in steelmaking and continuous casting, and is detrimental to the control of inclusions. Therefore, the N mass percentage is preferably controlled at $N \leq 0.003\%$. In some embodiments, the N mass percentage in the steel substrate meets $0 < N \leq 0.003\%$, for example, $0.001 \leq N \leq 0.003\%$.

Correspondingly, the S element in the steel is easy to form low-melting-point eutectic at the grain boundaries, and the plasticity of the material will be significantly deteriorated when its mass percentage is too high. Therefore, the mass percentage of the S element is controlled at $S \leq 0.01\%$. In some embodiments, the S mass percentage in the steel substrate meets $0 < S \leq 0.01\%$, for example, $0.001 \leq S \leq 0.01\%$.

Further, in the GPA steel having a coating of the present disclosure, the microstructure of the steel substrate is ferrite + martensite + residual austenite.

Further, in the GPA steel having a coating of the present disclosure, the volume fraction of ferrite is 20%~35%, such as 25%, 30%; and/or the volume fraction of martensite is 55%~70%, such as 60%, 65%.

Further, in the GPA steel having a coating of the present disclosure, in ferrite, the volume of grains having a size of 10 $\mu$m or less accounts for $\geq$85%, such as 85%~96%, and the volume of grains having a size of 5 $\mu$m or less accounts for $\geq$55%, such as 55%~71%.

Further, in the GPA steel having a coating of the present disclosure, the residual austenite has an average grain size of $\leq 2$ $\mu$m, such as 0.3~2$\mu$m; and/or the residual austenite has an average C content of $\geq$1.0wt%, such as 1.0wt% ~1.3wt%.

Further, in the GPA steel having a coating of the present disclosure, when spot welding is adopted for welding, if cracks on the surface of solder joint are generated, the maximum length of the cracks on the surface of solder joint is less than 5% of the plate thickness.

Further, the GPA steel having a coating of the present disclosure has an electrical resistivity of $4.5 \times 10^{-7} \sim 7.0 \times 10^{-7}\Omega m$, such as $5.0 \times 10^{-7}\Omega m$, $5.5 \times 10^{-7}\Omega m$, $6.0 \times 10^{-7}\Omega m$, $6.5 \times 10^{-7}\Omega m$, or within a range defined by any two of the aforementioned values.

In some embodiments, the GPA steel having a coating of the present disclosure has a yield strength of 850MPa~1000MPa, such as 880MPa, 900MPa, 920MPa, 950MPa, 980MPa, or within a range defined by any two of the aforementioned values.

In some embodiments, the GPA steel having a coating of the present disclosure has a tensile strength of 1180MPa~1300MPa, such as 1200MPa, 1230MPa, 1250MPa, 1280MPa, or within a range defined by any two of the aforementioned values.

In some embodiments, the GPA steel having a coating of the present disclosure has a uniform elongation of not less than 11%, such as 12%, 13%, 14%, 15%, 16%, or within a range defined by any two of the aforementioned values.

In some embodiments, the GPA steel having a coating of the present disclosure has an elongation at break of not less than 15%, preferably not less than 20%, such as 21%, 22%, 23%, 24%, 25%, or within a range defined by any two of the aforementioned values.

Further, in the GPA steel having a coating of the present disclosure, the mechanical properties satisfy: a yield strength of 850MPa~1000MPa, a tensile strength of 1180MPa~1300MPa, a uniform elongation of not less than 11%, an elongation at break of not less than 15%.

The electrical resistivity and mechanical properties of the GPA steel having a coating of the present disclosure refer to the electrical resistivity and mechanical properties of the steel substrate of the GPA steel having a coating.

There are no special restrictions on the coating in the present disclosure. Various known zinc-containing coatings can be used in the present disclosure. Further, the coating of the GPA steel having a coating of the present disclosure is a pure zinc coating, a zinc-iron alloy coating, a zinc-aluminum-magnesium coating (ZM), or an aluminum-zinc coating (AM). These coatings all meet industry standards, regional standards, or national standards.

The pure zinc coating may be hot-dip galvanized (GI), or may be electroplated galvanized (EG). The zinc-iron alloy coating may be hot-dip galvannealed (GA).

Accordingly, another object of the present disclosure is to provide a method for manufacturing the GPA steel having a coating, which is simple for production, and can provide high-strength steel having significantly improved spot-welding performance, especially the resistance of cracks on the surface of solder joint while having the same mechanical properties.

To achieve the above purpose, the present disclosure provides a manufacturing method for the GPA steel having a coating with excellent spot-welding performance, which comprises steps of:

(1) smelting and thin slab continuous casting;
(2) heating;
(3) hot-rolling: wherein the thickness of oxide scale on the surface of the strip steel after hot rolling is controlled at $\leq 6\mu m$, and the mass percentage of FeO+ $Fe_3O_4$ in the oxide scale on the surface of the strip steel after hot rolling is $\leq 55wt\%$;
(4) pickling, or pickling + cold rolling;
(5) continuous annealing: wherein the steel is annealed at 800~920 °C, then slowly cooled to 680~750 °C at a cooling rate of 3~10 °C/s; then rapidly cooled to 180~280°C at a cooling rate of 50~100°C/s; then re-heated to 350~450°C, held for 60~300s; and finally cooled to room temperature;
(6) plating a zinc-containing coating.

In the technical solution of the present disclosure, the manufacturing method adopts a thin slab continuous casting process matched with pickling or pickling + cold rolling process, and can obtain an GPA steel having a coating with excellent spot-welding performance after continuous annealing and coating manufacturing. The GPA steel having a coating produced by this manufacturing method can be welded using the conventional spot-welding process of car factories, and the maximum length of the crack on the surface of the solder joint is less than 5% of the plate thickness, which has a very low spot-welding crack sensitivity and has very excellent quality.

In the above step (1) of the present disclosure, because a thin slab continuous casting is adopted, the rough rolling process can be omitted, and the hot rolling deformation rate can be reduced, so that the performance of the steel plate in the subsequent step (4) and step (5) is guaranteed. In addition, because the thin slab continuous casting is used in step (1), it can make full use of the heat of the slab and reduce the energy consumption required for heating, so as to obtain a more uniform structure of ferrite or ferrite + pearlite, which is conducive to maintaining a certain amount of fine grain ferrite in the microstructure of the substrate of the final product in step (6) and improving the uniformity of the structure.

In step (3), the thickness of oxide scale on the surface of the strip steel after hot rolling is controlled at $\leq 6\mu m$, and the (FeO+ $Fe_3O_4$) in the oxide scale on the surface of the strip steel after hot rolling is $\leq 55wt\%$, which is conducive to the subsequent progress in step (4), and has an important influence on the properties of the steel plate obtained after continuous annealing. It is because that in the technical solution of the present disclosure, FeO, $Fe_3O_4$ are more difficult to be pickled than $Fe_2O_3$. Controlling the thickness of the oxide scale on the surface of the strip steel after hot rolling and the (FeO+$Fe_3O_4$) in the oxide scale on the surface of the strip steel after hot rolling prepared by the present disclosure to be $\leq 55wt\%$, can effectively improve the pickling effect, and obtain the surface of the pickled plate that can be directly used for continuous annealing. Because the pickled plate can be directly subjected to continuous annealing, the deformation rate of the hot-rolled microstructure is small, and the microstructure of the steel plate is dominated by pearlite and ferrite. Therefore, under the same continuous annealing conditions, the strength of the material can be reduced, so as to provide more uniform microstructure, thereby obtaining excellent ductility.

Correspondingly, in step (5), the inventors optimized the design for the continuous annealing process. A homogenized austenite or austenite + ferrite structure can be formed by controlling the annealing temperature of 800~920 °C for annealing. Then, the ferrite content in the structure can be further adjusted by slowly cooling the steel to 680~750°C at a cooling rate of 3~10°C/s, so as to improve the plasticity of the material. After that, it is cooled to 180~280°C (that is, between $M_s$ and $M_f$) at a rate of 50~100°C/s. At this time, a part of austenite is transformed into martensite, which can ensure the high strength of the steel. After that, it is re-heated to 350~450°C and held for 60~300s, which can partition carbon in martensite and austenite to form a certain amount of carbon-rich residual austenite that can be stably maintained to room temperature. Due to the TRIP effect, the work hardening ability and formability of the steel can be significantly improved, and the high-strength steel plate with excellent ductility can be obtained.

In addition, in view of the inventors' understanding of the influence of carbon, silicon, manganese, chromium on cracks on the surface of solder joint, especially the understanding that it is easy to enrich silicon and manganese in the superficial layer of the steel plate to significantly increase the sensitivity of cracks on the surface of solder joint, the present disclosure not only strictly limits the content of carbon, silicon, manganese, chromium of the steel in the composition design, but also reduces the content of carbon, silicon and manganese elements compared with the same strength grade of steel, and adds chromium element to increase the hardenability of the steel, so as to ensure that the designed proportions of martensite and austenite as well as the carbon partitioning are obtained in step (5) and the sheet having a zinc coating obtained after step (6) has low crack sensitivity on the surface of solder joint, that is, the maximum length value of cracks on the surface of solder joint is less than 5% of the plate thickness.

Because the GPA steel of the present disclosure adopts a chemical composition design of carbon, silicon, manganese, chromium as well as ferrite grain refinement, during the continuous annealing process, the nucleation point of austenite reverse phase transition increases, and the grain size can be further refined, so that the average grain size of the residual austenite that can be stably maintained to room temperature is $\leq 2\ \mu m$ and the average C content in the residual austenite is $\geq 1.0wt\%$.

It should be noted that when the zinc-containing coating is plated in step (6), the zinc-containing coating can be produced by but not limited to hot dipping, electroplating and vacuum plating technology.

Further, in the method for manufacturing the GPA steel having a coating of the present disclosure, in step (1), the slab thickness at the outlet of thin slab continuous casting is controlled at 55~65mm.

Further, in the method for manufacturing the GPA steel having a coating of the present disclosure, in step (1), the drawing speed of thin strip continuous casting is controlled at 2~5m/min.

Further, in the method for manufacturing the GPA steel having a coating of the present disclosure, in step (2), the slab is heated to 1200~1250°C.

Further, in the method for manufacturing the GPA steel having a coating of the present disclosure, in step (3), the rolling-end temperature is controlled at 850~900°C, the coiling temperature is controlled at 500~600°C.

Further, in the method for manufacturing the GPA steel having a coating of the present disclosure, in step (4), when pickling + cold rolling is adopted, the cold rolling deformation rate is controlled at 50%~60%.

Further, in the method for manufacturing the GPA steel having a coating of the present disclosure, in step (5), the volume content of hydrogen in the reducing atmosphere in the continuous annealing furnace is controlled at 10~15%.

Further, in the method for manufacturing the GPA steel having a coating of the present disclosure, the annealing process parameters of step (5) satisfy at least one of the following items:

   an annealing temperature of 820~870°C;
   slowly cooled to 680~720°C at a cooling rate of 3~10°C/s;
   rapidly cooled to 200~250°C at a cooling rate of 50~100°C/s;
   re-heated to 400~430°C after rapid cooling, held for 150~250s.

Compared with the prior art, the GPA steel having a coating with excellent spot-welding performance of the present disclosure, and the manufacturing method thereof have the following advantages and beneficial effects:
In the GPA steel having a coating with excellent spot-welding performance of the present disclosure, its chemical element composition is based on C, Si, Mn and Cr without any precious alloying elements, and by optimizing the proportions of C, Si, Mn and Cr, the GPA steel having a coating with excellent spot-welding performance can be obtained.

The production process of the manufacturing method designed by the present disclosure is simple, and the obtained GPA steel has significantly improved resistance to cracks on the surface of solder joint under the same mechanical properties, and will have a good application prospect in the production of safety structural parts for downstream users.

### Description of the drawings

Fig. 1 schematically shows the spot-welding cracks in the ultra-high-strength steel having a zinc-containing coating layer.

### Detailed Description

The GPA steel having a coating with excellent spot-welding performance and the manufacturing method thereof of the present disclosure will be further explained and interpreted below in conjunction with the specific examples of the description, but the explanation and interpretation do not constitute an undue limitation to the technical solution of the present disclosure.

### Examples 1-35 and Comparative Examples 1-4

The GPA steel having a coating of Examples 1-35 of the present disclosure and the comparative steel of Comparative Examples 1-4 were prepared by the following steps:

   (1) smelting and thin slab continuous casting were performed according to the chemical compositions and ratios shown in Table 1, wherein the slab thickness at the outlet of thin strip continuous casting was controlled to be 55~65mm, and the drawing speed of thin strip continuous casting was controlled to be 2~5m/min to obtain the corresponding slab;

(2) heating: wherein the slab was heated to 1200~1250°C;

(3) hot-rolling: wherein the thickness of oxide scale on the surface of the strip steel after hot rolling was controlled at ≤6μm, (FeO+ $Fe_3O_4$) in the oxide scale on the surface of the strip steel after hot rolling was ≤55wt%, the rolling-end temperature was controlled at 850~900°C and the coiling temperature was controlled at 500~600°C;

(4) pickling, or pickling + cold rolling: when pickling + cold rolling was adopted, the cold rolling deformation rate was controlled to be 50%~60%, and when the steel was galvanized with zinc or zinc alloy directly after pickling, the cold rolling deformation rate in Table 2-2 was 0;

(5) continuous annealing: wherein the volume content of hydrogen in the reducing atmosphere in the continuous annealing furnace was controlled to be 10~15%; wherein the steel was annealed at 800~920 °C, then slowly cooled to 680~750 °C at a cooling rate of 3~10 °C/s; then rapidly cooled to 180~280°C at a cooling rate of 50~100°C/s; then re-heated to 350~450°C, held for 60~300s; and finally cooled to room temperature;

(6) plating a coating of zinc or zinc alloy, wherein the coating may be specifically selected as a pure zinc coating, a zinc-iron alloy coating, a zinc-aluminum-magnesium coating or an aluminum-zinc coating.

It should be noted that, in the present disclosure, the chemical composition and related process parameters adopted for the GPA steel having a coating of Examples 1-35 all met the requirements designed in the present disclosure. Correspondingly, there were parameters in the chemical composition and related process parameters adopted for the comparative steel of Comparative Examples 1-4 that did not meet the requirements designed in the present disclosure.

The coatings in Examples 1-35 and Comparative Examples 1-4 were hot-dip galvanized.

Table 1 lists the mass percentage of each chemical element of steel substrate of the GPA steel having a coating of Examples 1-35 and the comparative steel of Comparative Examples 1-4.

Table 1. (wt%, the balance is Fe and other unavoidable impurities except P, S and N)

| Ex. | C | Si | Mn | Cr | Al | Nb | v | Ti | P | S | N |
|---|---|---|---|---|---|---|---|---|---|---|---|
| Ex.1 | 0.22 | 1.20 | 1.50 | 4.00 | 0.40 | 0.03 | 0.01 | 0.01 | 0.0084 | 0.0021 | 0.003 |
| Ex.2 | 0.21 | 1.10 | 1.75 | 3.50 | 0.50 | 0.02 | 0.02 | - | 0.0075 | 0.0023 | 0.002 |
| Ex.3 | 0.20 | 1.00 | 2.00 | 3.00 | 0.60 | 0.01 | - | - | 0.0065 | 0.0025 | 0.001 |
| Ex.4 | 0.19 | 0.90 | 2.30 | 2.50 | 0.75 | - | - | 0.03 | 0.0055 | 0.0027 | 0.002 |
| Ex.5 | 0.18 | 0.80 | 2.50 | 2.00 | 0.90 | - | 0.01 | 0.01 | 0.0073 | 0.0029 | 0.001 |
| Ex.6 | 0.219 | 1.18 | 2.49 | 2.01 | 0.45 | - | - | - | 0.0063 | 0.0031 | 0.003 |
| Ex.7 | 0.211 | 1.08 | 2.25 | 2.49 | 0.55 | 0.005 | - | - | 0.0053 | 0.0033 | 0.001 |
| Ex.8 | 0.199 | 0.99 | 1.99 | 3.02 | 0.65 | - | 0.005 | - | 0.0043 | 0.0035 | 0.002 |
| Ex.9 | 0.191 | 0.88 | 1.73 | 3.48 | 0.80 | - | - | - | 0.0083 | 0.0037 | 0.003 |
| Ex.10 | 0.181 | 0.81 | 1.51 | 3.99 | 0.89 | - | - | - | 0.0072 | 0.0039 | 0.003 |
| Ex.11 | 0.215 | 1.16 | 1.55 | 3.95 | 0.42 | - | 0.003 | - | 0.0062 | 0.0020 | 0.002 |
| Ex.12 | 0.205 | 1.06 | 1.80 | 3.45 | 0.57 | 0.002 | - | - | 0.0052 | 0.0022 | 0.001 |
| Ex.13 | 0.195 | 0.96 | 2.05 | 2.95 | 0.67 | 0.03 | 0.03 | 0.03 | 0.0042 | 0.0024 | 0.002 |
| Ex.14 | 0.185 | 0.86 | 2.20 | 2.45 | 0.77 | 0.01 | 0.01 | 0.01 | 0.0082 | 0.0026 | 0.001 |
| Ex.15 | 0.182 | 0.82 | 2.45 | 2.10 | 0.87 | 0.006 | 0.007 | - | 0.0070 | 0.0028 | 0.003 |
| Ex.16 | 0.213 | 0.85 | 1.52 | 3.98 | 0.88 | - | 0.007 | 0.008 | 0.0060 | 0.0030 | 0.001 |
| Ex.17 | 0.203 | 0.95 | 1.85 | 3.40 | 0.78 | 0.003 | - | 0.002 | 0.0050 | 0.0032 | 0.002 |
| Ex.18 | 0.193 | 1.05 | 1.95 | 2.90 | 0.68 | 0.03 | 0.01 | 0.01 | 0.0040 | 0.0034 | 0.003 |
| Ex.19 | 0.187 | 1.15 | 2.22 | 2.40 | 0.58 | 0.02 | 0.02 | - | 0.0080 | 0.0036 | 0.003 |
| Ex.20 | 0.183 | 1.19 | 2.48 | 2.02 | 0.41 | 0.01 | - | - | 0.0068 | 0.0038 | 0.002 |
| Ex.21 | 0.218 | 0.83 | 2.47 | 2.05 | 0.86 | - | - | 0.03 | 0.0058 | 0.0040 | 0.001 |
| Ex.22 | 0.208 | 0.93 | 2.27 | 2.55 | 0.76 | - | 0.01 | 0.01 | 0.0048 | 0.0021 | 0.002 |

(continued)

| Ex. | C | Si | Mn | Cr | Al | Nb | v | Ti | P | S | N |
|---|---|---|---|---|---|---|---|---|---|---|---|
| Ex.23 | 0.198 | 1.03 | 2.07 | 3.05 | 0.66 | 0.02 | 0.01 | 0.02 | 0.0079 | 0.0023 | 0.001 |
| Ex.24 | 0.188 | 1.13 | 1.87 | 3.55 | 0.56 | 0.005 | - | - | 0.0069 | 0.0025 | 0.003 |
| Ex.25 | 0.184 | 1.17 | 1.53 | 3.97 | 0.43 | - | - | - | 0.0059 | 0.0027 | 0.001 |
| Ex.26 | 0.22 | 1.00 | 2.00 | 3.00 | 0.70 | - | - | - | 0.0049 | 0.0029 | 0.002 |
| Ex.27 | 0.20 | 0.80 | 2.50 | 2.00 | 0.80 | - | - | 0.004 | 0.0077 | 0.0031 | 0.003 |
| Ex.28 | 0.219 | 0.99 | 2.49 | 2.01 | 0.71 | - | 0.003 | - | 0.0067 | 0.0033 | 0.003 |
| Ex.29 | 0.201 | 0.81 | 2.01 | 2.99 | 0.79 | 0.002 | - | - | 0.0057 | 0.0035 | 0.002 |
| Ex.30 | 0.215 | 0.95 | 2.05 | 2.90 | 0.70 | 0.003 | 0.003 | 0.003 | 0.0047 | 0.0037 | 0.001 |
| Ex.31 | 0.205 | 0.85 | 2.45 | 2.10 | 0.80 | 0.01 | 0.01 | 0.01 | 0.0085 | 0.0039 | 0.002 |
| Ex.32 | 0.219 | 0.81 | 2.01 | 2.99 | 0.79 | 0.006 | 0.007 | - | 0.0075 | 0.0020 | 0.001 |
| Ex.33 | 0.201 | 0.99 | 2.49 | 2.01 | 0.71 | - | 0.007 | 0.008 | 0.0065 | 0.0022 | 0.003 |
| Ex.34 | 0.219 | 0.81 | 2.49 | 2.01 | 0.79 | 0.003 | - | 0.002 | 0.0055 | 0.0024 | 0.001 |
| Ex.35 | 0.201 | 0.99 | 2.01 | 2.99 | 0.71 | - | - | 0.002 | 0.0045 | 0.0026 | 0.002 |
| CEx.1 | **_0.23_** | **_0.70_** | **_2.60_** | - | **_0.30_** | - | - | - | 0.0075 | 0.0022 | 0.003 |
| CEx.2 | 0.21 | 1.00 | 2.30 | - | 0.90 | - | - | 0.03 | 0.0068 | 0.0024 | 0.001 |
| CEx.3 | **_0.17_** | 1.10 | 2.50 | - | **_1.00_** | 0.001 | 0.001 | 0.002 | 0.0071 | 0.0027 | 0.005 |
| CEx.4 | 0.20 | **_1.30_** | **_1.40_** | - | 0.70 | - | 0.002 | - | 0.0055 | 0.0023 | 0.004 |

Correspondingly, Table 2-1 and Table 2-2 list the specific process parameters in the above process steps (1)-(6) for the GPA steel having a coating of Examples 1-35 and the comparative steel of Comparative Examples 1-4.

Table 2-1.

| No. | The slab thickness at the outlet of thin strip continuous casting (mm) | Drawing speed of continuous casting (m/min) | Slab heating temperature (°C) | Thickness of oxide scale of hot rolled coil (μm) | Proportion of (FeO+Fe$_3$O$_4$) (%) | Rolling-end temperature of hot rolling (°C) | Coiling temperature of hot rolling (°C) |
|---|---|---|---|---|---|---|---|
| Ex.1 | 55 | 2.1 | 1235 | 2.7 | 54.3 | 855 | 570 |
| Ex.2 | 56 | 4.8 | 1205 | 3.8 | 51.2 | 875 | 560 |
| Ex.3 | 57 | 3.2 | 1225 | 3.5 | 44.1 | 880 | 565 |
| Ex.4 | 58 | 2.6 | 1230 | 2.6 | 45.9 | 890 | 545 |
| Ex.5 | 59 | 4.3 | 1250 | 3.9 | 33.5 | 900 | 550 |
| Ex.6 | 60 | 3.1 | 1245 | 3.7 | 42.3 | 890 | 500 |
| Ex.7 | 61 | 3.8 | 1230 | 5.1 | 17.3 | 860 | 525 |
| Ex.8 | 62 | 3.3 | 1215 | 2.8 | 21.7 | 895 | 550 |
| Ex.9 | 63 | 3.9 | 1225 | 4.0 | 27.5 | 885 | 565 |
| Ex.10 | 64 | 3.5 | 1210 | 3.3 | 23.8 | 880 | 585 |
| Ex.11 | 65 | 5.0 | 1200 | 5.5 | 25.6 | 889 | 515 |
| Ex.12 | 64 | 2.9 | 1220 | 2.2 | 46.8 | 882 | 535 |
| Ex.13 | 63 | 2.3 | 1215 | 2.8 | 29.5 | 878 | 520 |

(continued)

| No. | The slab thickness at the outlet of thin strip continuous casting (mm) | Drawing speed of continuous casting (m/min) | Slab heating temperature (°C) | Thickness of oxide scale of hot rolled coil (μm) | Proportion of (FeO+Fe$_3$O$_4$) (%) | Rolling-end temperature of hot rolling (°C) | Coiling temperature of hot rolling (°C) |
|---|---|---|---|---|---|---|---|
| Ex.14 | 62 | 2.0 | 1240 | 3.2 | 35.4 | 865 | 555 |
| Ex.15 | 61 | 4.9 | 1250 | 2.7 | 42.3 | 899 | 535 |
| Ex.16 | 60 | 4.4 | 1210 | 3.5 | 47.9 | 870 | 565 |
| Ex.17 | 59 | 2.2 | 1240 | 1.8 | 37.8 | 898 | 575 |
| Ex.18 | 58 | 2.7 | 1240 | 2.5 | 22.5 | 897 | 510 |
| Ex.19 | 57 | 3.9 | 1250 | 3.3 | 36.8 | 863 | 600 |
| Ex.20 | 56 | 3.4 | 1250 | 5.9 | 23.6 | 850 | 590 |
| Ex.21 | 55 | 2.6 | 1240 | 1.1 | 49.5 | 855 | 520 |
| Ex.22 | 56 | 3.2 | 1200 | 2.5 | 28.3 | 875 | 550 |
| Ex.23 | 57 | 4.7 | 1235 | 2.6 | 35.8 | 885 | 500 |
| Ex.24 | 58 | 4.1 | 1225 | 2.7 | 27.8 | 890 | 580 |
| Ex.25 | 59 | 4.2 | 1205 | 3.1 | 26.4 | 895 | 530 |
| Ex.26 | 60 | 2.4 | 1210 | 5.8 | 23.8 | 875 | 565 |
| Ex.27 | 61 | 3.0 | 1210 | 2.4 | 35.2 | 895 | 590 |
| Ex.28 | 62 | 4.7 | 1205 | 1.2 | 42.2 | 871 | 570 |
| Ex.29 | 63 | 4.3 | 1215 | 3.4 | 27.3 | 850 | 575 |
| Ex.30 | 64 | 3.3 | 1240 | 3.7 | 24.3 | 860 | 510 |
| Ex.31 | 65 | 3.7 | 1230 | 1.6 | 35.7 | 895 | 550 |
| Ex.32 | 64 | 3.9 | 1220 | 3.5 | 29.1 | 900 | 545 |
| Ex.33 | 63 | 2.6 | 1235 | 2.2 | 33.6 | 850 | 525 |
| Ex.34 | 62 | 2.2 | 1205 | 2.8 | 41.5 | 880 | 530 |
| Ex.35 | 61 | 3.8 | 1225 | 2.2 | 38.7 | 870 | 540 |
| CEx.1 | 60 | 1.9 | 1260 | **_6.5_** | **_56.3_** | 845 | 650 |
| CEx.2 | 54 | 3.6 | 1250 | 3.2 | 27.4 | 905 | 560 |
| CEx.3 | 56 | 5.2 | 1240 | 2.7 | **_58.4_** | 865 | 565 |
| CEx.4 | 66 | 4.6 | 1190 | **_6.9_** | 43.1 | 880 | 475 |

Note: in the above Table 2-1, "Proportion of (FeO+ Fe$_3$O$_4$)" refers to the mass percentage of FeO and Fe$_3$O$_4$ in the oxide scale on surface of the strip steel after hot rolling, based on the mass of the oxide scale.

Table 2-2.

| No. | Cold rolling reduction rate (%) | Annealing temperature (°C) | Slow cooling rate (°C/s) | Cooling-start temperature of rapid cooling (°C) | Cooling-end temperature of rapid cooling (°C) | Rapid cooling rate (°C/s) | Re-heating temperature (°C) | Holding time of re-heating (s) |
|---|---|---|---|---|---|---|---|---|
| Ex.1 | 55 | 835 | 3 | 705 | 195 | 90 | 400 | 300 |
| Ex.2 | 50 | 920 | 8 | 715 | 280 | 100 | 420 | 60 |

(continued)

| No. | Cold rolling reduction rate (%) | Annealing temperature (°C) | Slow cooling rate (°C/s) | Cooling-start temperature of rapid cooling (°C) | Cooling-end temperature of rapid cooling (°C) | Rapid cooling rate (°C/s) | Re-heating temperature (°C) | Holding time of re-heating (s) |
|---|---|---|---|---|---|---|---|---|
| Ex.3 | 59 | 865 | 5 | 718 | 185 | 85 | 405 | 180 |
| Ex.4 | 51 | 810 | 5 | 704 | 190 | 65 | 430 | 250 |
| Ex.5 | 0 | 840 | 7 | 750 | 235 | 70 | 390 | 150 |
| Ex.6 | 58 | 860 | 4 | 730 | 218 | 80 | 383 | 170 |
| Ex.7 | 0 | 870 | 3 | 680 | 180 | 90 | 398 | 290 |
| Ex.8 | 54 | 855 | 7 | 690 | 200 | 60 | 440 | 250 |
| Ex.9 | 55 | 800 | 7 | 720 | 195 | 75 | 428 | 260 |
| Ex.10 | 0 | 820 | 10 | 730 | 275 | 100 | 405 | 240 |
| Ex.11 | 54 | 830 | 5 | 700 | 225 | 50 | 400 | 140 |
| Ex.12 | 0 | 835 | 6 | 750 | 200 | 70 | 425 | 170 |
| Ex.13 | 0 | 870 | 7 | 710 | 215 | 55 | 380 | 195 |
| Ex.14 | 56 | 840 | 3 | 725 | 255 | 75 | 413 | 260 |
| Ex.15 | 0 | 920 | 8 | 715 | 240 | 80 | 393 | 280 |
| Ex.16 | 57 | 864 | 5 | 720 | 265 | 90 | 355 | 200 |
| Ex.17 | 54 | 855 | 7 | 725 | 277 | 85 | 350 | 250 |
| Ex.18 | 55 | 910 | 9 | 705 | 245 | 95 | 368 | 180 |
| Ex.19 | 58 | 880 | 4 | 705 | 250 | 85 | 423 | 290 |
| Ex.20 | 54 | 810 | 6 | 749 | 270 | 50 | 403 | 100 |
| Ex.21 | 58 | 845 | 6 | 735 | 210 | 95 | 372 | 70 |
| Ex.22 | 59 | 860 | 9 | 715 | 205 | 95 | 415 | 225 |
| Ex.23 | 56 | 852 | 9 | 705 | 200 | 100 | 387 | 230 |
| Ex.24 | 60 | 915 | 4 | 695 | 265 | 85 | 450 | 240 |
| Ex.25 | 51 | 895 | 5 | 735 | 255 | 60 | 410 | 140 |
| Ex.26 | 50 | 830 | 9 | 685 | 280 | 75 | 378 | 220 |
| Ex.27 | 53 | 858 | 8 | 720 | 270 | 70 | 418 | 60 |
| Ex.28 | 52 | 843 | 4 | 710 | 230 | 100 | 445 | 290 |
| Ex.29 | 59 | 857 | 6 | 715 | 280 | 50 | 400 | 65 |
| Ex.30 | 57 | 846 | 3 | 705 | 253 | 75 | 450 | 295 |
| Ex.31 | 54 | 900 | 7 | 700 | 220 | 55 | 370 | 285 |
| Ex.32 | 58 | 905 | 10 | 705 | 255 | 80 | 410 | 150 |
| Ex.33 | 60 | 820 | 5 | 715 | 205 | 90 | 430 | 300 |
| Ex.34 | 55 | 838 | 4 | 745 | 250 | 100 | 405 | 80 |
| Ex.35 | 54 | 903 | 6 | 685 | 215 | 60 | 425 | 220 |
| CEx.1 | 0 | ***785*** | 8 | ***670*** | ***175*** | 75 | ***345*** | ***50*** |
| CEx.2 | 55 | ***930*** | ***2*** | ***720*** | 210 | 105 | 380 | 210 |
| CEx.3 | 63 | 850 | ***11*** | 690 | ***290*** | 85 | ***455*** | 150 |
| CEx.4 | 49 | 870 | 6 | 750 | 240 | ***47*** | 415 | ***380*** |

It should be noted that, before the plating process of the above step (6), in order to verify that the GPA steels having a coating of Examples 1-35 had very excellent properties. Before the plating process, the inventors sampled the GPA steel substrates having a coating of Examples 1-35 obtained after the continuous annealing process of step (5) and the comparative steel substrates of Comparative Examples 1-4, and conducted microstructure observations on the substrate of each Example and Comparative Example. At the same time, the mechanical properties of the substrate of each Example and Comparative Example were tested. The results of microstructure observation of the substrate of each Example and Comparative Example were listed in Table 3 below, and the test results of mechanical properties of the substrate of each Example and Comparative Example were listed in Table 4 below.

Table 3 lists the results of microstructure observation of the GPA steel substrates having a coating in Examples 1-35 and the comparative steel substrates in Comparative Examples 1-4.

The methods for the microstructure observation and measurement were described as follows:
The volume fractions of ferrite and martensite were measured by metallographic methods;

The size and proportion by volume of ferrite grains were measured by metallographic methods;

The average grain size of residual austenite was measured by metallographic methods;

The average C content in residual austenite was measured by Castaing electron probe microanalysis (EPMA).

Table 3.

| No. | Volume fraction of ferrite (%) | Volume fraction of martensite (%) | Proportion by volume of ferrite having a grain size of $\leq 10\mu m$ (%) | Proportion by volume of ferrite having a grain size of $\leq 5\mu m$ (%) | Average grain size of residual austenite ($\mu m$) | Average C content in residual austenite (wt%) |
|---|---|---|---|---|---|---|
| Ex.1 | 21.67 | 68.37 | 89.81 | 59.13 | 1.3 | 1.20 |
| Ex.2 | 22.93 | 69.02 | 87.89 | 60.17 | 0.8 | 1.29 |
| Ex.3 | 30.24 | 61.63 | 92.17 | 62.98 | 0.9 | 1.15 |
| Ex.4 | 30.57 | 59.11 | 92.08 | 58.15 | 1.5 | 1.32 |
| Ex.5 | 22.58 | 68.76 | 94.14 | 68.38 | 0.8 | 1.24 |
| Ex.6 | 34.38 | 56.71 | 92.23 | 57.82 | 1.9 | 1.24 |
| Ex.7 | 32.82 | 58.39 | 90.71 | 60.43 | 1.4 | 1.20 |
| Ex.8 | 22.55 | 64.91 | 86.76 | 70.14 | 0.7 | 1.21 |
| Ex.9 | 29.36 | 59.72 | 89.55 | 68.89 | 1.9 | 1.12 |
| Ex.10 | 31.34 | 60.07 | 93.76 | 70.48 | 1.4 | 1.23 |
| Ex.11 | 21.25 | 64.67 | 91.28 | 69.89 | 2.0 | 1.15 |
| Ex.12 | 25.27 | 61.37 | 88.43 | 67.64 | 1.6 | 1.27 |
| Ex.13 | 23.25 | 63.71 | 93.56 | 64.27 | 1.3 | 1.19 |
| Ex.14 | 21.31 | 64.02 | 92.14 | 70.04 | 1.1 | 1.29 |
| Ex.15 | 21.18 | 64.5 | 94.37 | 67.47 | 1.7 | 1.19 |
| Ex.16 | 30.78 | 55.18 | 91.43 | 67.37 | 1.9 | 1.26 |
| Ex.17 | 28.11 | 59.44 | 87.43 | 67.04 | 1.1 | 1.19 |
| Ex.18 | 26.25 | 63.79 | 90.45 | 69.77 | 0.9 | 1.11 |
| Ex.19 | 29.59 | 60.52 | 88.76 | 58.89 | 0.7 | 1.15 |
| Ex.20 | 24.76 | 66.85 | 93.78 | 66.85 | 1.5 | 1.17 |
| Ex.21 | 25.45 | 65.14 | 90.63 | 69.07 | 0.3 | 1.06 |
| Ex.22 | 27.22 | 61.48 | 91.56 | 66.07 | 1.8 | 1.04 |
| Ex.23 | 25.43 | 65.3 | 94.78 | 60.85 | 1.4 | 1.25 |
| Ex.24 | 27.56 | 59.15 | 89.35 | 59.93 | 0.8 | 1.25 |
| Ex.25 | 25.34 | 61.64 | 87.69 | 66.03 | 0.4 | 1.10 |

(continued)

| No. | Volume fraction of ferrite (%) | Volume fraction of martensite (%) | Proportion by volume of ferrite having a grain size of ≤10μm (%) | Proportion by volume of ferrite having a grain size of ≤5μm (%) | Average grain size of residual austenite (μm) | Average C content in residual austenite (wt%) |
|---|---|---|---|---|---|---|
| Ex.26 | 24.11 | 66.93 | 91.65 | 68.88 | 0.6 | 1.20 |
| Ex.27 | 23.78 | 66.32 | 93.23 | 70.36 | 1.3 | 1.16 |
| Ex.28 | 21.56 | 68.68 | 87.36 | 65.85 | 1.4 | 1.26 |
| Ex.29 | 28.32 | 60.92 | 91.59 | 62.43 | 1.3 | 1.10 |
| Ex.30 | 31.95 | 58.28 | 89.75 | 61.64 | 0.9 | 1.10 |
| Ex.31 | 34.15 | 55.05 | 87.63 | 59.67 | 1.7 | 1.15 |
| Ex.32 | 34.85 | 53.72 | 91.24 | 60.89 | 1.5 | 1.13 |
| Ex.33 | 23.18 | 67.45 | 93.47 | 63.22 | 1.1 | 1.02 |
| Ex.34 | 32.78 | 57.24 | 85.18 | 65.45 | 1.6 | 1.19 |
| Ex.35 | 29.71 | 56.92 | 95.23 | 67.93 | 0.9 | 1.05 |
| CEx.1 | *38.61* | 57.78 | 83.66 | 69.43 | *2.3* | 1.21 |
| CEx.2 | *18.93* | *72.23* | 89.52 | *51.21* | 1.7 | *0.82* |
| CEx.3 | 26.45 | 58.68 | *84.47* | *46.24* | 0.9 | *0.94* |
| CEx.4 | 29.79 | 55.35 | *81.39* | 59.78 | *2.2* | 1.11 |

From the above Table 3, it can be seen that the microstructures of the substrates of Examples 1-35 designed in the present disclosure are: ferrite + martensite + residual austenite. Moreover, the substrate microstructures of each example meet the following indexes: the volume fraction of ferrite is 20% to 35%, and the volume fraction of martensite is 55% to 70%; among which, the proportion by volume of ferrite having a grain size of no more than 10μm is ≥85%, and the proportion by volume of ferrite having a grain size of no more than 5μm is ≥ 55%; the average grain size of residual austenite is ≤2μm, and the average C content in the residual austenite is ≥1.0wt%.

Correspondingly, when the mechanical properties of the substrate of each Example and Comparative Example were tested, the testing methods of the relevant mechanical properties were as follows:
Tensile property test: tensile test was performed according to GB/T228.1-2010 Metallic materials-Tensile testing -Part 1: Method of test at room temperature, to test the yield strength, tensile strength, uniform elongation and elongation at break of the GPA steel substrates having a coating obtained in Examples 1-35 and the comparative steel substrates in Comparative Examples 1-4.

Electrical resistivity test: electrical resistivity was tested according to GB/T 351-2019 Metallic materials-Resistivity measurement method.

Table 4 lists the test results of mechanical properties and electrical resistivity of the GPA substrates having a coating in Examples 1-35 and the comparative steel substrates in Comparative Examples 1-4.

Table 4.

| No. | Yield strength (MPa) | Tensile strength (MPa) | Uniform elongation (%) | Elongation at break (%) | Electrical resistivity (Ωm) |
|---|---|---|---|---|---|
| Ex.1 | 870 | 1205 | 15.4 | 22.1 | $4.51 \times 10^{-7}$ |
| Ex.2 | 915 | 1210 | 14.7 | 21.3 | $4.97 \times 10^{-7}$ |
| Ex.3 | 880 | 1285 | 13.6 | 22.9 | $4.67 \times 10^{-7}$ |
| Ex.4 | 900 | 1180 | 14.2 | 22.8 | $4.75 \times 10^{-7}$ |
| Ex.5 | 965 | 1215 | 14.7 | 21.6 | $6.99 \times 10^{-7}$ |
| Ex.6 | 945 | 1240 | 14.8 | 23.9 | $5.69 \times 10^{-7}$ |
| Ex.7 | 900 | 1210 | 15.1 | 22.4 | $6.45 \times 10^{-7}$ |

(continued)

| No. | Yield strength (MPa) | Tensile strength (MPa) | Uniform elongation (%) | Elongation at break (%) | Electrical resistivity (Ωm) |
|---|---|---|---|---|---|
| Ex.8 | 855 | 1260 | 14.4 | 22.8 | $5.83 \times 10^{-7}$ |
| Ex.9 | 985 | 1275 | 14.7 | 22.3 | $4.78 \times 10^{-7}$ |
| Ex.10 | 920 | 1235 | 14.2 | 24.4 | $4.52 \times 10^{-7}$ |
| Ex.11 | 865 | 1260 | 15.2 | 21.4 | $4.91 \times 10^{-7}$ |
| Ex.12 | 880 | 1205 | 15.1 | 22.8 | $4.63 \times 10^{-7}$ |
| Ex.13 | 925 | 1270 | 13.8 | 21.8 | $4.77 \times 10^{-7}$ |
| Ex.14 | 875 | 1190 | 14.3 | 22.7 | $4.88 \times 10^{-7}$ |
| Ex.15 | 890 | 1240 | 15.1 | 23.3 | $4.95 \times 10^{-7}$ |
| Ex.16 | 865 | 1265 | 15.2 | 23.2 | $4.63 \times 10^{-7}$ |
| Ex.17 | 995 | 1220 | 13.7 | 22.6 | $4.75 \times 10^{-7}$ |
| Ex.18 | 935 | 1185 | 14.9 | 22.2 | $4.83 \times 10^{-7}$ |
| Ex.19 | 870 | 1190 | 14.6 | 22.6 | $5.23 \times 10^{-7}$ |
| Ex.20 | 895 | 1235 | 14.1 | 21.1 | $4.75 \times 10^{-7}$ |
| Ex.21 | 905 | 1250 | 14.2 | 22.1 | $4.81 \times 10^{-7}$ |
| Ex.22 | 890 | 1280 | 14.7 | 22.4 | $4.85 \times 10^{-7}$ |
| Ex.23 | 930 | 1260 | 14.9 | 23.3 | $5.83 \times 10^{-7}$ |
| Ex.24 | 875 | 1240 | 14.2 | 21.6 | $5.63 \times 10^{-7}$ |
| Ex.25 | 920 | 1270 | 14.9 | 22.4 | $4.68 \times 10^{-7}$ |
| Ex.26 | 940 | 1215 | 14.8 | 21.8 | $4.91 \times 10^{-7}$ |
| Ex.27 | 910 | 1230 | 14.2 | 23.1 | $4.83 \times 10^{-7}$ |
| Ex.28 | 880 | 1190 | 14.9 | 21.9 | $4.67 \times 10^{-7}$ |
| Ex.29 | 955 | 1250 | 14.4 | 23.3 | $4.84 \times 10^{-7}$ |
| Ex.30 | 870 | 1225 | 14.1 | 21.7 | $4.57 \times 10^{-7}$ |
| Ex.31 | 985 | 1275 | 14.9 | 21.8 | $4.55 \times 10^{-7}$ |
| Ex.32 | 860 | 1190 | 14.4 | 22.3 | $4.72 \times 10^{-7}$ |
| Ex.33 | 935 | 1240 | 14.3 | 22.9 | $4.83 \times 10^{-7}$ |
| Ex.34 | 925 | 1235 | 14.6 | 22.7 | $4.75 \times 10^{-7}$ |
| Ex.35 | 945 | 1230 | 14.4 | 22.5 | $4.86 \times 10^{-7}$ |
| CEx.1 | ***835*** | 1190 | 15.1 | 23.2 | ***$4.35 \times 10^{-7}$*** |
| CEx.2 | 925 | 1250 | 14.2 | 21.9 | ***$4.25 \times 10^{-7}$*** |
| CEx.3 | 855 | 1185 | ***10.2*** | 18.3 | ***$4.32 \times 10^{-7}$*** |
| CEx.4 | 980 | 1335 | ***10.9*** | 19.6 | ***$4.43 \times 10^{-7}$*** |

As can be seen from the above Table 4, the substrates of the steels of Examples 1-35 of the present disclosure had very excellent mechanical properties, and the mechanical properties all met the design requirements of the present disclosure, and the substrates of the GPA steel having a coating of Examples 1-35 had a yield strength of 855~995MPa, a tensile strength of 1180~1285MPa, a uniform elongation of 13.6-15.4%, and an elongation at break of 21.1-23.9%. And the electrical resistivity of each Example of the present disclosure was $4.5 \times 10^{-7}$~$7.0 \times 10^{-7}$ Ωm. In contrast, Comparative Example 1 had a low yield strength and Comparative Example 3 and Comparative Example 4 had low uniform elongation. Although the mechanical properties of Comparative Example 2 met the requirements of the present disclosure, its electrical resistivity was lower than $4.5 \times 10^{-7}$Ωm. In additional, it can be seen that the electrical resistivities of Comparative Example 1-4 were all lower than $4.5\times10^{-7}\Omega$m.

Correspondingly, in order to verify that the final products of the GPA steels having a coating prepared in Examples 1-35 according to the above steps (1)-(6) has fairly excellent low spot welding crack sensitivity, the inventors took samples respectively for the final products of the GPA steels having a coating of Examples 1-35 and the comparative steel plates of Comparative Examples 1-4, and conducted welding tests with spot welding on the final product of each Example and Comparative Example. The relevant spot-welding process parameters are listed in Table 5 below.

Table 5 lists the specific spot-welding process parameters of the GPA steels having a coating of Examples 1-35 and the comparative steel plates of Comparative Example 1-4.

Table 5.

| No. | Steel plate thickness (mm) | Electrode pressure (kN) | Number of pulses | Time for 1 pulse (ms) | Cooling time (ms) | Total welding time (ms) | Keeping time (ms) |
|---|---|---|---|---|---|---|---|
| Ex.1 | 1.4 | 3.6 | 3 | 120 | 20 | 400 | 250 |
| Ex.2 | 1.2 | 2.6 | 1 | 270 | 0 | 270 | 250 |
| Ex.3 | 1.4 | 3.6 | 3 | 120 | 20 | 400 | 250 |
| Ex.4 | 1.3 | 3.6 | 3 | 120 | 20 | 400 | 250 |
| Ex.5 | 2.2 | 4.0 | 4 | 130 | 40 | 640 | 250 |
| Ex.6 | 1.5 | 3.6 | 3 | 120 | 20 | 400 | 250 |
| Ex.7 | 2.4 | 4.0 | 5 | 120 | 40 | 760 | 250 |
| Ex.8 | 1.5 | 3.6 | 3 | 120 | 20 | 400 | 250 |
| Ex.9 | 1.2 | 2.6 | 1 | 270 | 0 | 270 | 250 |
| Ex.10 | 3.0 | 5.0 | 5 | 120 | 40 | 760 | 250 |
| Ex.11 | 1.2 | 2.6 | 1 | 270 | 0 | 270 | 250 |
| Ex.12 | 2.8 | 5.0 | 5 | 120 | 40 | 760 | 250 |
| Ex.13 | 2.4 | 4.0 | 5 | 120 | 40 | 760 | 250 |
| Ex.14 | 2.0 | 4 | 4 | 120 | 40 | 600 | 250 |
| Ex.15 | 2.6 | 5.0 | 5 | 120 | 40 | 760 | 250 |
| Ex.16 | 1.6 | 3.6 | 3 | 130 | 40 | 470 | 250 |
| Ex.17 | 1.3 | 3.6 | 3 | 120 | 20 | 400 | 250 |
| Ex.18 | 1.6 | 3.6 | 3 | 130 | 40 | 470 | 250 |
| Ex.19 | 1.2 | 2.6 | 1 | 270 | 0 | 270 | 250 |
| Ex.20 | 1.0 | 2.6 | 1 | 230 | 0 | 230 | 250 |
| Ex.21 | 1.2 | 2.6 | 1 | 270 | 0 | 270 | 250 |
| Ex.22 | 1.4 | 3.6 | 3 | 120 | 20 | 400 | 250 |
| Ex.23 | 2.0 | 4 | 4 | 120 | 40 | 600 | 250 |
| Ex.24 | 1.85 | 3.6 | 3 | 130 | 40 | 470 | 250 |
| Ex.25 | 1.85 | 3.6 | 3 | 130 | 40 | 470 | 250 |
| Ex.26 | 1.8 | 3.6 | 3 | 130 | 40 | 470 | 250 |
| Ex.27 | 1.4 | 3.6 | 3 | 120 | 20 | 400 | 250 |
| Ex.28 | 1.4 | 3.6 | 3 | 120 | 20 | 400 | 250 |
| Ex.29 | 1.4 | 3.6 | 3 | 120 | 20 | 400 | 250 |
| Ex.30 | 1.85 | 3.6 | 3 | 130 | 40 | 470 | 250 |
| Ex.31 | 1.5 | 3.6 | 3 | 120 | 20 | 400 | 250 |

(continued)

| No. | Steel plate thickness (mm) | Electrode pressure (kN) | Number of pulses | Time for 1 pulse (ms) | Cooling time (ms) | Total welding time (ms) | Keeping time (ms) |
|---|---|---|---|---|---|---|---|
| Ex.32 | 1.2 | 2.6 | 1 | 270 | 0 | 270 | 250 |
| Ex.33 | 1.3 | 3.6 | 3 | 120 | 20 | 400 | 250 |
| Ex.34 | 1.4 | 3.6 | 3 | 120 | 20 | 400 | 250 |
| Ex.35 | 1.5 | 3.6 | 3 | 120 | 20 | 400 | 250 |
| CEx.1 | 2.8 | 5.0 | 5 | 120 | 40 | 760 | 250 |
| CEx.2 | 1.4 | 3.6 | 3 | 120 | 20 | 400 | 250 |
| CEx.3 | 1.6 | 3.6 | 3 | 130 | 40 | 470 | 250 |
| CEx.4 | 1.2 | 2.6 | 1 | 270 | 0 | 270 | 250 |

In the actual spot-welding process, each of tensile shear (TSS) specimen, cross tensile (CTS) specimen, metallographic specimen was welded under each welding current, TSS, CTS can correspond to the joint bearing capacity of the sample after spot welding of the final product of the steel plate of each Example and Comparative Example measured by a tensile testing machine according to ISO 14273-2016 and ISO 14272-2016 standards. The results are shown in Table 6 below.

Correspondingly, for the obtained metallographic samples, the coating on the surface of the joint was removed with dilute hydrochloric acid first, and the distribution and direction of spot-welding cracks were observed under the microscope. The cross-section that passes through the nugget center, where the most spot-welding cracks could be cut was selected as the metallographic section of the joint, and the cross-section was sampled by wire cutting, wherein the cross-section included all the welding characteristic areas of the spot-welding joint. The surface of the intercepted sample was washed to prevent the interference of foreign matter on the test results, and the washed sample was dried. The dried sample was mounted, ground and polished, and measured under a metallographic microscope, and the maximum crack length was filled in Table 6.

Table 6 lists the mechanical properties of the solder joints and the test results of the cracks of solder joints for the GPA steels having a coating in Examples 1-35 and Comparative Examples 1-4 after spot welding.

Table 6.

| No. | Steel plate thickness mm | Nominal weight of the coating g/m$^2$ | Tensile shear force of the joint kN | Cross tensile force of the joint kN | No welding splash | | Welding splash | |
|---|---|---|---|---|---|---|---|---|
| | | | | | Maximum crack length μm | Maximum crack length/steel plate thickness % | Maximum crack length μm | Maximum crack length/steel plate thickness % |
| Ex.1 | 1.4 | 70/71 | ≥15 | ≥11 | 0 | 0 | 26.74 | 1.91 |
| Ex.2 | 1.2 | 67/66 | ≥12 | ≥8.2 | 0 | 0 | 25.68 | 2.14 |
| Ex.3 | 1.4 | 66/67 | ≥15 | ≥11 | 0 | 0 | 0 | 0 |
| Ex.4 | 1.3 | 74/74 | ≥14 | ≥10.5 | 0 | 0 | 34.06 | 2.62 |
| Ex.5 | 2.2 | 62/66 | ≥26 | ≥16.6 | 0 | 0 | 44.66 | 2.03 |
| Ex.6 | 1.5 | 73/73 | ≥16.5 | ≥11 | 0 | 0 | 30.75 | 2.05 |
| Ex.7 | 2.4 | 70/71 | ≥29 | ≥19.8 | 0 | 0 | 5.76 | 0.24 |
| Ex.8 | 1.5 | 75/75 | ≥16.5 | ≥11 | 0 | 0 | 69 | 4.6 |
| Ex.9 | 1.2 | 72/74 | ≥12 | ≥8.2 | 0 | 0 | 47.4 | 3.95 |
| Ex.10 | 3.0 | 72/73 | ≥39 | ≥23 | 0 | 0 | 117.9 | 3.93 |
| Ex.11 | 1.2 | 75/73 | ≥12 | ≥8.2 | 0 | 0 | 33.36 | 2.78 |
| Ex.12 | 2.8 | 74/76 | ≥35 | ≥23 | 0 | 0 | 92.12 | 3.29 |

(continued)

| No. | Steel plate thickness mm | Nominal weight of the coating g/m$^2$ | Tensile shear force of the joint kN | Cross tensile force of the joint kN | No welding splash | | Welding splash | |
|---|---|---|---|---|---|---|---|---|
| | | | | | Maximum crack length $\mu$m | Maximum crack length/steel plate thickness % | Maximum crack length $\mu$m | Maximum crack length/steel plate thickness % |
| Ex.13 | 2.4 | 75/75 | ≥29 | ≥19.8 | 0 | 0 | 0 | 0 |
| Ex.14 | 2.0 | 73/70 | ≥24 | ≥13.8 | 0 | 0 | 5.4 | 0.27 |
| Ex.15 | 2.6 | 70/69 | ≥32 | ≥21 | 0 | 0 | 57.46 | 2.21 |
| Ex.16 | 1.6 | 71/72 | ≥18 | ≥11.8 | 0 | 0 | 36.32 | 2.27 |
| Ex.17 | 1.3 | 71/73 | ≥14 | ≥10.5 | 0 | 0 | 26.13 | 2.01 |
| Ex.18 | 1.6 | 68/68 | ≥18 | ≥11.8 | 0 | 0 | 35.36 | 2.21 |
| Ex.19 | 1.2 | 68/69 | ≥12 | ≥8.2 | 0 | 0 | 29.76 | 2.48 |
| Ex.20 | 1.0 | 76/77 | ≥12 | ≥7.8 | 0 | 0 | 34.4 | 3.44 |
| Ex.21 | 1.2 | 76/77 | ≥12 | ≥8.2 | 0 | 0 | 0 | 0 |
| Ex.22 | 1.4 | 72/73 | ≥15 | ≥11 | 0 | 0 | 0 | 0 |
| Ex.23 | 2.0 | 71/72 | ≥24 | ≥13.8 | 0 | 0 | 40.8 | 2.04 |
| Ex.24 | 1.85 | 69/69 | ≥22 | ≥13.8 | 0 | 0 | 38.665 | 2.09 |
| Ex.25 | 1.85 | 70/72 | ≥22 | ≥13.8 | 0 | 0 | 32.93 | 1.78 |
| Ex.26 | 1.8 | 70/71 | ≥21 | ≥13.8 | 0 | 0 | 4.14 | 0.23 |
| Ex.27 | 1.4 | 65/67 | ≥15 | ≥11 | 0 | 0 | 66.36 | 4.74 |
| Ex.28 | 1.4 | 73/72 | ≥15 | ≥11 | 0 | 0 | 0 | 0 |
| Ex.29 | 1.4 | 86/86 | ≥15 | ≥11 | 0 | 0 | 54.74 | 3.91 |
| Ex.30 | 1.85 | 68/69 | ≥22 | ≥13.8 | 0 | 0 | 0 | 0 |
| Ex.31 | 1.5 | 65/67 | ≥16.5 | ≥11 | 0 | 0 | 0 | 0 |
| Ex.32 | 1.2 | 73/74 | ≥12 | ≥8.2 | 0 | 0 | 54.12 | 4.51 |
| Ex.33 | 1.3 | 70/69 | ≥14 | ≥10.5 | 0 | 0 | 0 | 0 |
| Ex.34 | 1.4 | 73/73 | ≥15 | ≥11 | 0 | 0 | 0 | 0 |
| Ex.35 | 1.5 | 74/76 | ≥16.5 | ≥11 | 0 | 0 | 0 | 0 |
| CEx.1 | 2.8 | 65/67 | ≥35 | ≥23 | 127.68 | 4.56 | 456.96 | 16.32 |
| CEx.2 | 1.4 | 71/72 | ≥15 | ≥11 | 60.48 | 4.32 | 245.14 | 17.51 |
| CEx.3 | 1.6 | 78/79 | ≥18 | ≥11.8 | 84.96 | 5.31 | 262.72 | 16.42 |
| CEx.4 | 1.2 | 67/63 | ≥12 | ≥8.2 | 56.28 | 4.69 | 206.52 | 17.21 |

Note: The two values of the nominal weight of the coating in Table 6 refer to the coating weight on the front and back sides of the steel plate.

At the same time, it can be seen from Table 6 that for the final GPA steels having a coating in Examples 1-35 in the present disclosure, when the welding current is less than the current when splash occurs (abbreviated as no welding splash), there is no spot-welding crack in the welded solder joint; when the welding current is larger than the current when splash occurs (abbreviated as welding splash), the longest crack of the welded solder joint is less than 5% of the plate thickness. Thus, it shows that the GPA steel having a coating in each Example of Examples 1-35 designed by adopting the technical solution of the present disclosure has excellent low spot-welding crack sensitivity while ensuring the performance of the plate. For the comparative steel plates of Comparative Example 1-4 designed in the present disclosure, regardless of whether the welding current is greater than the current when splash occurs, the welded solder joints will have cracks, and the cracks of the solder joints with welding splash are more serious than those of the solder joints without welding splash, and the ratio of the maximum crack length to the plate thickness is much greater than 5%.

It should be noted that combinations of the various technical features in this case are not limited to the combinations described in the claims of this case or the combinations described in the specific examples. All technical features recorded in this case can be combined freely or associated in any way unless a contradiction occurs.

It should also be noted that the examples listed above are only specific embodiments of the present disclosure. Obviously, the present disclosure is not limited to the above examples, and changes or modifications made thereto can be directly derived from the present disclosure or easily conceived of by those skilled in the art, all of which fall within the protection scope of the present disclosure.

**Claims**

1. A GPA steel having a coating with excellent spot-welding performance, which comprises a steel substrate and a zinc-containing coating on the surface of the steel substrate, wherein the steel substrate comprises Fe and unavoidable impurity elements, wherein the steel substrate further comprises the following chemical elements in a mass percentage:
C: 0.18~0.22%; Si: 0.80~1.20%; Mn: 1.50~2.50%; Cr: 2.00~4.00%; Al: 0.40~0.90%.

2. The GPA steel having a coating according to claim 1, wherein the steel substrate comprises each chemical element in a mass percentage as follows:
C: 0.18~0.220%; Si: 0.80~1.20%; Mn: 1.50~2.50%; Cr: 2.00~4.00%; Al: 0.40~0.90%; with a balance of Fe and unavoidable impurity elements.

3. The GPA steel having a coating according to claim 1 or 2, wherein the chemical elements of the steel substrate further comprise at least one of the following elements:

$$0 < Nb \leq 0.03\%;$$

$$0 < Ti \leq 0.03\%;$$

$$0 < V \leq 0.03\%.$$

4. The GPA steel having a coating according to claim 3, wherein the mass percentage content of each chemical element in the steel substrate meets at least one of the following items:

$$0 < Nb \leq 0.01\%;$$

$$0 < Ti \leq 0.01\%;$$

$$0 < V \leq 0.01\%.$$

5. The GPA steel having a coating according to claim 1 or 2, wherein the mass percentage content of each chemical element in the steel substrate meets at least one of the following items:

C: 0.20~0.22%;
Si: 0.80~1.00%;
Mn: 2.00~2.50%;
Cr: 2.00~3.00%.

6. The GPA steel having a coating according to claim 1 or 2, wherein the mass percentage of unavoidable impurity elements in the steel substrate meets: P≤0.01 %, S≤0.01 %, N≤0.003%.

7. The GPA steel having a coating according to claim 1 or 2, wherein the microstructure of the steel substrate is ferrite + martensite + residual austenite.

8. The GPA steel having a coating according to claim 7, wherein the volume fraction of ferrite is 20%~35%; and/or the volume fraction of martensite is 55%~70%.

9. The GPA steel having a coating according to claim 7, wherein, in ferrite, the volume of grains having a size of 10 $\mu$m or less accounts for ≥85%, and the volume of grains having a size of 5 $\mu$m or less accounts for ≥55%.

10. The GPA steel having a coating according to claim 7, wherein the residual austenite has an average grain size of ≤ 2 $\mu$m; and/or the residual austenite has an average C content of ≥1 .0%.

11. The GPA steel having a coating according to claim 1 or 2, wherein when spot welding is adopted for welding, if cracks on the surface of solder joint are generated, the maximum length of the cracks on the surface of solder joint is less than 5% of the plate thickness.

12. The GPA steel having a coating according to claim 1 or 2, wherein its mechanical properties satisfy: a yield strength of 850MPa~1000MPa, a tensile strength of 1180MPa~1300MPa, a uniform elongation of not less than 11%, an elongation at break of not less than 15%.

13. The GPA steel having a coating according to claim 1 or 2, wherein its electrical resistivity is $4.5\times10^{-7}$~$7.0\times10^{-7}\Omega$m.

14. The GPA steel having a coating according to claim 1 or 2, wherein the coating is a pure zinc coating, a zinc-iron alloy coating, a zinc-aluminum-magnesium coating, or an aluminum-zinc coating.

15. A manufacturing method for the GPA steel having a coating according to any one of claims 1-14, which comprises steps of:

    (1) smelting and thin slab continuous casting;
    (2) heating;
    (3) hot-rolling: wherein the thickness of oxide scale on the surface of the strip steel after hot rolling is controlled at ≤6$\mu$m, and the mass percentage of $FeO+ Fe_3O_4$ in the oxide scale on the surface of the strip steel after hot rolling is ≤55wt%;
    (4) pickling, or pickling + cold rolling;
    (5) continuous annealing: wherein the steel is annealed at 800~920 °C, then slowly cooled to 680~750 °C at a cooling rate of 3~10 °C/s; then rapidly cooled to 180~280°C at a cooling rate of 50~100°C/s; then re-heated to 350~450°C, held for 60~300s; and finally cooled to room temperature;
    (6) plating a zinc-containing coating.

16. The manufacturing method according to claim 15, wherein in step (1), the slab thickness at the outlet of thin slab continuous casting is controlled at 55~65mm.

17. The manufacturing method according to claim 15, wherein in step (1), the drawing speed of thin strip continuous casting is controlled at 2~5m/min.

18. The manufacturing method according to claim 15, wherein in step (2), the slab is heated to 1200~1250°C.

19. The manufacturing method according to claim 15, wherein in step (3), the rolling-end temperature is controlled at 850~900°C, the coiling temperature is controlled at 500~600°C.

20. The manufacturing method according to claim 15, wherein in step (4), when pickling + cold rolling is adopted, the cold rolling deformation rate is controlled at 50%~60%.

21. The manufacturing method according to claim 15, wherein in step (5), the volume content of hydrogen in the reducing atmosphere in the continuous annealing furnace is controlled at 10~15%.

22. The manufacturing method according to claim 15, wherein the annealing process parameters of step (5) satisfy at least one of the following items:

an annealing temperature of 820~870°C;
slowly cooled to 680~720°C at a cooling rate of 3~10°C/s;
rapidly cooled to 200~250°C at a cooling rate of 50-100°C/s;
re-heated to 400~430°C after rapid cooling, held for 150~250s.

Fig. 1

## INTERNATIONAL SEARCH REPORT

| International application No. |
| --- |
| **PCT/CN2024/071511** |

| A. | CLASSIFICATION OF SUBJECT MATTER |
| --- | --- |

C22C38/02(2006.01)i; C22C38/04(2006.01)i; C22C38/06(2006.01)i; C22C38/12(2006.01)i; C22C38/20(2006.01)i; C22C38/22(2006.01)i; C22C38/24(2006.01)i; C22C38/26(2006.01)i; C22C38/28(2006.01)i; C22C38/32(2006.01)i; C22C38/38(2006.01)i; C22C38/44(2006.01)i; C22C38/50(2006.01)i; C22C38/54(2006.01)i; C22C38/58(2006.01)i; C21D1/26(2006.01)i; C21D6/00(2006.01)i; C21D8/02(2006.01)i; C21D9/00(2006.01)i; C21D9/52(2006.01)i

According to International Patent Classification (IPC) or to both national classification and IPC

| B. | FIELDS SEARCHED |
| --- | --- |

Minimum documentation searched (classification system followed by classification symbols)

    IPC: C22C C21D

Documentation searched other than minimum documentation to the extent that such documents are included in the fields searched

Electronic data base consulted during the international search (name of data base and, where practicable, search terms used)

    CNABS; DWPI; WPABS; CNKI; CNTXT; USTXT; WOTXT; EPTXT; ISI_Web of Science: 宝山钢铁股份有限公司, 吉帕, 碳, 硅, 锰, 铬, 铝, 铌, 钛, 钒, 酸洗, 冷轧, 退火, Gepa-grade, C, carbon, Si, silicon, Mn, manganese, Cr, chrome, Al, aluminum, Nb, niobium, Ti, titanium, V, vanadium, pickled, cold-rolled, anneal

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115038807 A (NIPPON STEEL CORP.) 09 September 2022 (2022-09-09) description, paragraphs 87-136, 191, 199, and 218-249 | 1-14 |
| X | CN 108374127 A (YUCAITANG (SUZHOU) MATERIAL TECHNOLOGY CO., LTD.) 07 August 2018 (2018-08-07) description, paragraphs 15, 22-24, and 32 | 1-14 |
| A | CN 114107785 A (BAOSHAN IRON & STEEL CO., LTD.) 01 March 2022 (2022-03-01) claims 1-17 | 1-22 |
| A | CN 113122769 A (BAOSHAN IRON & STEEL CO., LTD.) 16 July 2021 (2021-07-16) claims 1-10 | 1-22 |
| A | CN 112080685 A (HBIS CO., LTD.) 15 December 2020 (2020-12-15) claims 1-8 | 1-22 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 March 2024** | **25 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 650 481 A1**

**INTERNATIONAL SEARCH REPORT**

International application No.

**PCT/CN2024/071511**

### C.    DOCUMENTS CONSIDERED TO BE RELEVANT

| Category* | Citation of document, with indication, where appropriate, of the relevant passages | Relevant to claim No. |
|---|---|---|
| A | CN 112760554 A (BAOSHAN IRON & STEEL CO., LTD.) 07 May 2021 (2021-05-07) claims 1-15 | 1-22 |

Form PCT/ISA/210 (second sheet) (July 2022)

24

## INTERNATIONAL SEARCH REPORT
### Information on patent family members

International application No.

**PCT/CN2024/071511**

| Patent document cited in search report | | | Publication date (day/month/year) | Patent family member(s) | | | Publication date (day/month/year) |
|---|---|---|---|---|---|---|---|
| CN | 115038807 | A | 09 September 2022 | KR | 20220134777 | A | 05 October 2022 |
| | | | | JPWO | 2021251276 | A1 | 16 December 2021 |
| | | | | JP | 7440800 | B2 | 29 February 2024 |
| | | | | US | 2023183834 | A1 | 15 June 2023 |
| | | | | WO | 2021251276 | A1 | 16 December 2021 |
| | | | | EP | 4163405 | A1 | 12 April 2023 |
| | | | | IN | 202217062345 | A | 27 January 2023 |
| | | | | MX | 2022015468 | A | 16 January 2023 |
| | | | | CN | 115038807 | B | 11 August 2023 |
| CN | 108374127 | A | 07 August 2018 | EP | 3789509 | A1 | 10 March 2021 |
| | | | | EP | 3789509 | A4 | 10 November 2021 |
| | | | | EP | 3789509 | B1 | 07 February 2024 |
| | | | | JP | 7336144 | B2 | 31 August 2023 |
| | | | | WO | 2019205699 | A1 | 31 October 2019 |
| | | | | KR | 20210003236 | A | 11 January 2021 |
| | | | | US | 2021214818 | A1 | 15 July 2021 |
| CN | 114107785 | A | 01 March 2022 | CN | 114107785 | B | 21 October 2022 |
| | | | | WO | 2022042622 | A1 | 03 March 2022 |
| | | | | KR | 20230058083 | A | 02 May 2023 |
| | | | | AU | 2021332868 | A1 | 04 May 2023 |
| | | | | VN | 96444 | A | 25 July 2023 |
| | | | | EP | 4206347 | A1 | 05 July 2023 |
| | | | | IN | 202317017246 | A | 15 December 2023 |
| | | | | US | 2023357882 | A1 | 09 November 2023 |
| CN | 113122769 | A | 16 July 2021 | WO | 2021136355 | A1 | 08 July 2021 |
| | | | | CN | 113122769 | B | 28 June 2022 |
| | | | | AU | 2020418007 | A1 | 21 July 2022 |
| | | | | BR | 112022011028 | A2 | 16 August 2022 |
| | | | | KR | 20220119639 | A | 30 August 2022 |
| | | | | EP | 4086362 | A1 | 09 November 2022 |
| | | | | IN | 202217043539 | A | 06 January 2023 |
| | | | | US | 2023049380 | A1 | 16 February 2023 |
| | | | | EP | 4086362 | A4 | 19 July 2023 |
| CN | 112080685 | A | 15 December 2020 | CN | 112080685 | B | 03 June 2022 |
| CN | 112760554 | A | 07 May 2021 | WO | 2021078111 | A1 | 29 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310033276
- CN 108015401 A
- CN 109385515 A
- CN 110892087 A
- GB T22812010 A
- GB T3512019 A